# EUROPEAN PATENT APPLICATION

(11) **EP 4 075 361 A1**
(43) Date of publication of application: **19.10.2022**
(21) Application number: 22168613.2
(22) Date of filing: 14.04.2022
(51) Int. Cl.: G06Q 20/38, G06Q 20/34

(54) **UTILIZING PAYMENT TOKENS FOR REWARD PURCHASES**

(30) Priority: 14.04.2021 US 202117230681
(71) Applicant: Capital One Services, LLC, McLean, VA 22102 (US)
(72) Inventor: SHERIF, Timur, McLean, 22102 (US); LIN, Tao, McLean, 22102 (US); WU, Christopher, McLean, 22102 (US)
(74) Representative: Beal, James Michael

(57) **Abstract**

Aspects described herein allow for systems and methods for spending reward points utilizing payment tokens and verifying reward payment tokens in cross-site transactions for reward purchases. The reward payment token system may include one or more of a reward payment token server, a merchant server, or one or more devices all connected via the network. The reward payment token server may include one or more of the following components: a reward payment token engine, a token translation engine, a rewards engine, a reward payment token database, or a rewards database. The reward payment token system and reward payment token server provide the unique capability of providing real-time spending of rewards without the customer having a pre-existing relationship and/or integration between the two businesses.

## Description

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### FIELD OF USE

Aspects of the disclosure relate generally to reward payment tokens. More specifically, aspects of the disclosure may provide for verifying reward payment tokens in cross-site transactions for reward purchases.

### BACKGROUND

Using reward points can be difficult and must be generally used at a reward point issuer's website or at a merchant that the issuer has integrated with (such as pay with points at a specific merchant). Often, customers will let rewards balances build up and not spend them, causing a liability on the books of the issuers. Helping customers spend their reward points quickly and easily would benefit both the customers and the reward point issuer.

There is a two-sided problem that exists. First, on the reward points issuer side, when customers accrue reward points, the reward point issuer does not benefit to maintain these reward points because the reward points end up as a liability on the reward points issuer books. The reward points issuer wants to enable customers to use those reward points in any way possible and as soon as possible. Generally, customers are more satisfied when they use and spend their reward points. Second, on the customer side, the customers do not and cannot always spend their reward points because of a difficulty with the process. The customer may have to go through a reward portal to spend the reward points or the customer may have to redeem the rewards points for a specific purchase or transaction.

Aspects described herein may address these and other problems, and generally improve the quality, efficiency, and speed of customers spending their reward points.

### SUMMARY

The following presents a simplified summary of various aspects described herein. This summary is not an extensive overview, and is not intended to identify key or critical elements or to delineate the scope of the claims. The following summary merely presents some concepts in a simplified form as an introductory prelude to the more detailed description provided below.

Aspects described herein may allow for tokens or virtual card numbers (VCNs) to be generated to look like a standard credit card number (with expiration and card verification value (CCV) number) to be used as a reward payment token. Currently, tokens are created for and connected to a specific plastic credit card. By creating this special class of reward payment tokens that connect directly to a customer's rewards account and/or primary account, it is possible to allow a customer to create a token that merchants see as a credit card but draws on the customer's reward balance rather than on the customer's credit line.

More particularly, some aspects described herein may provide a computer-implemented method for verifying reward payment tokens in cross-site transactions for reward purchases. The method may comprise the following steps: receiving, by a reward payment token engine executing on a reward payment token server, a purchase request for a reward purchase in a cross-site transaction on a merchant website; requesting, by the reward payment token engine, a reward payment token for the reward purchase from a token translation engine executing on the reward payment token server, wherein the reward payment token includes a 16-digit virtual card number and the reward payment token matches and is utilized as a standard credit card on the merchant website for the cross-site transaction; generating, by the token translation engine, the reward payment token for the reward purchase; returning, by the token translation engine, the reward payment token for the cross-site transaction on the merchant website; receiving, by the token translation engine, the reward payment token from the merchant website; verifying, by a rewards engine executing on the reward payment token server, a reward balance is greater than the reward purchase; and approving, by the token translation engine, the cross-site transaction and sending the approved cross-site transaction to the merchant website for the reward purchase.

According to some embodiments, the reward payment token may include an expiration date. Additionally, the reward payment token includes a card verification value (CW). The method may further include the step of validating, by the token translation engine, the reward payment token as a reward transaction and not a credit card transaction. Additionally, validating the reward payment token may include identifying a specific bank identification number of the reward payment token as the reward transaction. Further, validating the reward payment token may include identifying a specific card verification value (CW) of the reward payment token as the reward transaction. Additionally, validating the reward payment token may include utilizing a real-time time stamp on the reward payment token and the reward purchase as the reward transaction. The reward payment token server may comprise a reward payment token database connected to the reward payment token engine and the reward payment token database may comprise a plurality of customer accounts and reward payment tokens linked with each of the plurality of customer accounts. Further, the reward payment token server may comprise a rewards database connected to the rewards engine, the rewards database comprising a plurality of reward accounts linked with each of the plurality of customer accounts. The rewards database may comprise the reward balance from the plurality of reward accounts. The method may further include the step of crediting, by the rewards engine, the reward account for the reward purchase.

Additionally, other aspects described herein may provide a system to verify reward payment tokens in cross-site transactions for reward purchase. The system may include: a reward payment token engine executing on a reward payment token server; a reward payment token database connected to the reward payment token engine, a rewards engine executing on the reward payment token server; and a rewards database connected to the rewards engine. The reward payment token database may comprise a plurality of customer accounts and reward payment tokens linked with each of the plurality of customer accounts. The rewards database may comprise a plurality of reward accounts linked with each of the plurality of customer accounts, and further including a reward balance from the plurality of reward accounts. The system may also include a token translation engine executing on the reward payment token server and memory storing instructions that, when executed by the reward payment token server, cause the reward payment token system to: receive, by the reward payment token engine executing on the reward payment token server, a purchase request for a reward purchase in a cross-site transaction to a merchant website; request, by the reward payment token engine, a reward payment token for the reward purchase from the token translation engine, wherein the reward payment token includes a 16-digit virtual card number, an expiration date, and a card verification value (CW), and further wherein the reward payment token matches and is utilized as a standard credit card on the merchant website for the cross-site transaction; generate, by the token translation engine, the reward payment token for the reward purchase; return, by the token translation engine, the reward payment token for the cross-site transaction on the merchant website; receive, by the token translation engine, the reward payment token from the merchant website; verify, by the rewards engine, the reward balance is greater than the reward purchase; and approve, by the token translation engine, the cross-site transaction and sending the approved cross-site transaction to the merchant website for the reward purchase.

Additionally, other aspects described herein may provide one or more non-transitory media storing instructions that, when executed by one or more processors, may cause a reward payment token server to perform steps comprising: receiving, by a reward payment token engine executing on a reward payment token server, a purchase request for a reward purchase from a customer to a merchant website for a cross-site transaction, wherein the reward payment token server includes a reward payment token database that includes a plurality of customer accounts and reward payment tokens linked with each of the plurality of customer accounts, wherein the reward payment token database is connected to the reward payment token engine; requesting, by the reward payment token engine, a reward payment token for the reward purchase from a token translation engine executing on the reward payment token server, wherein the reward payment token includes a 16-digit virtual card number, an expiration date, and a card verification value (CVV), and further wherein the reward payment token matches and is utilized as a standard credit card on the merchant website for the cross-site transaction; generating, by the token translation engine, the reward payment token for the reward purchase; returning, by the token translation engine, the reward payment token to the customer; receiving, by the token translation engine, the reward payment token from the merchant website; validating, by the token translation engine, the reward payment token as a reward transaction and not a credit card transaction; verifying, by a rewards engine executing on the reward payment token server, a reward balance is greater than the reward purchase, wherein the reward payment token server includes a rewards database connected to the rewards engine, the rewards database comprising a plurality of reward accounts linked with each of the plurality of customer accounts, and further comprising the reward balance from the plurality of reward accounts; approving, by the token translation engine, the cross-site transaction and sending the approved cross-site transaction to the merchant website for the reward purchase; and crediting, by the rewards engine, the reward account from the customer for the reward purchase.

Corresponding apparatus, systems, and computer-readable media are also within the scope of the disclosure.

These features, along with many others, are discussed in greater detail below.

### BRIEF DESCRIPTION OF THE DRAWINGS

The present disclosure is illustrated by way of example and not limited in the accompanying figures in which like reference numerals indicate similar elements and in which:
FIG. 1 depicts an example of a computing device that may be used in implementing one or more aspects of the disclosure in accordance with one or more illustrative aspects discussed herein;
FIG. 2 depicts an example reward payment token server according to one or more aspects of the disclosure;
FIG. 3 depicts an example process chart for the reward payment token system according to one or more aspects of the disclosure; and
FIG. 4 depicts a flow chart for a method of verifying reward payment tokens in cross-site transactions for reward purchases according to one or more aspects of the disclosure.

### DETAILED DESCRIPTION

In the following description of the various embodiments, reference is made to the accompanying drawings, which form a part hereof, and in which is shown by way of illustration various embodiments in which aspects of the disclosure may be practiced. It is to be understood that other embodiments may be utilized and structural and functional modifications may be made without departing from the scope of the present disclosure. Aspects of the disclosure are capable of other embodiments and of being practiced or being carried out in various ways. Also, it is to be understood that the phraseology and terminology used herein are for the purpose of description and should not be regarded as limiting. Rather, the phrases and terms used herein are to be given their broadest interpretation and meaning. The use of "including" and "comprising" and variations thereof is meant to encompass the items listed thereafter and equivalents thereof as well as additional items and equivalents thereof.

By way of introduction, aspects discussed herein may relate to methods and techniques for verifying reward payment tokens in cross-site transactions for reward purchases. Tokens (or virtual card numbers / VCNs) can be generated to look like a standard credit card number (with expiration date and card verification value / CW). Currently tokens are created for and connected to a plastic credit card number. By creating a special class of tokens that connect directly to a customer's rewards account or primary account, it is possible to allow a customer to create a reward payment token that merchants see as a credit card but draws on the customer's rewards balance rather than on their credit line.

Using rewards points can be difficult and must be used at a reward point issuer's website or at a merchant that the reward point issuer has integrated with (i.e. pay with reward points at a merchant's website). Often, customers will let rewards balances build up and not spend them, causing a liability on the books of reward point issuers. Helping customers spend their reward points quickly, efficiently, and easily would benefit both the customers and the reward point issuer.

Aspects described herein allow for systems and methods for spending reward points utilizing payment tokens and verifying reward payment tokens in cross-site transactions for reward purchases. The reward payment token system may include but not be limited to a reward payment token server, a merchant server, and one or more computing devices all connected via the network. The reward payment token server may include one or more of the following components: a reward payment token engine, a token translation engine, a rewards engine, a reward payment token database, and a rewards database. The reward payment token system and reward payment token server provide the unique capability of providing real-time spending of rewards without the customer having a pre-existing relationship and/or integration between the two businesses.

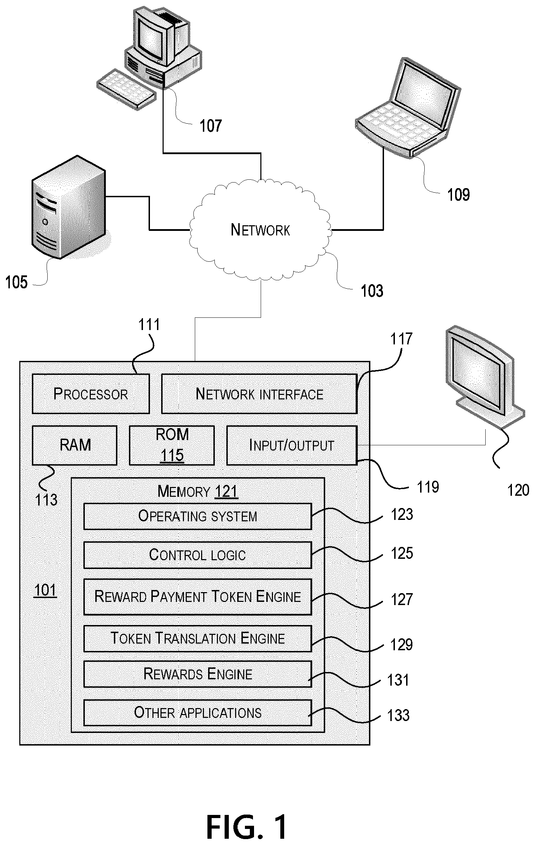

Before discussing these concepts in greater detail, however, several examples of a computing device that may be used in implementing and/or otherwise providing various aspects of the disclosure will first be discussed with respect to FIG. 1.

FIG. 1 illustrates one example of a reward payment token server 101 as a computing device that may be used to implement one or more illustrative aspects discussed herein. For example, the reward payment token server 101 may, in some embodiments, implement one or more aspects of the disclosure by reading and/or executing instructions and performing one or more actions based on the instructions. In some embodiments, the reward payment token server 101 may represent, be incorporated in, and/or include various devices such as a desktop computer, a computer server, a mobile device (e.g., a laptop computer, a tablet computer, a smart phone, any other types of mobile computing devices, and the like), and/or any other type of data processing device.

The reward payment token server 101 may, in some embodiments, operate in a standalone environment. In others, the reward payment token server 101 may operate in a networked environment. As shown in FIG. 1, various devices 101, 105, 107, and 109 may be interconnected as network nodes via a network 103, such as the Internet. Other networks may also or alternatively be used, including private intranets, corporate networks, LANs, wireless networks, personal networks (PAN), and the like. Network 103 is for illustration purposes and may be replaced with fewer or additional computer networks. A local area network (LAN) may have one or more of any known LAN topology and may use one or more of a variety of different protocols, such as Ethernet. Devices 101, 105, 107, 109 and other devices (not shown) may be connected to one or more of the networks via twisted pair wires, coaxial cable, fiber optics, radio waves or other communication media.

As seen in FIG. 1, the reward payment token server 101 may include a processor 111, RAM 113, ROM 115, network interface 117, input/output interfaces 119 (e.g., keyboard, mouse, display, printer, etc.), and memory 121. Processor 111 may include one or more computer processing units (CPUs), graphical processing units (GPUs), and/or other processing units such as a processor adapted to perform computations associated with machine learning. I/O 119 may include a variety of interface units and drives for reading, writing, displaying, and/or printing data or files. I/O 119 may be coupled with a display such as display 120. Memory 121 may store software for configuring the reward payment token server 101 into a special purpose computing device in order to perform one or more of the various functions discussed herein. Memory 121 may store operating system software 123 for controlling overall operation of the reward payment token server 101, control logic 125 for instructing the reward payment token server 101 to perform aspects discussed herein, a reward payment token engine 127, a token translation engine 129, a rewards engine 131, and other applications 133. Control logic 125 may be incorporated in and may be a part of one or more of the reward payment token engine 127, the token translation engine 129, or the rewards engine 131. In other embodiments, the reward payment token server 101 may include two or more of any and/or all of these components (e.g., two or more processors, two or more memories, etc.) and/or other components and/or subsystems not illustrated here.

Devices 105, 107, 109 may have similar or different architecture as described with respect to the reward payment token server 101. Those of skill in the art will appreciate that the functionality of the reward payment token server 101 (or device 105, 107, 109) as described herein may be spread across multiple data processing devices, for example, to distribute processing load across multiple computers, to segregate transactions based on geographic location, user access level, quality of service (QoS), etc. For example, the reward payment token server 101 and devices 105, 107, 109, and others may operate in concert to provide parallel computing features in support of the operation of control logic 125 and/or the reward payment token engine 127, the token translation engine 129, or the rewards engine 131.

One or more aspects discussed herein may be embodied in computer-usable or readable data and/or computer-executable instructions, such as in one or more program modules, executed by one or more computers or other devices as described herein. Generally, program modules include routines, programs, objects, components, data structures, etc. that perform particular tasks or implement particular abstract data types when executed by a processor in a computer or other device. The modules may be written in a source code programming language that is subsequently compiled for execution, or may be written in a scripting language such as (but not limited to) HTML or XML The computer executable instructions may be stored on a computer readable medium such as a hard disk, optical disk, removable storage media, solid state memory, RAM, etc. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like. Particular data structures may be used to more effectively implement one or more aspects discussed herein, and such data structures are contemplated within the scope of computer executable instructions and computer-usable data described herein. Various aspects discussed herein may be embodied as a method, a computing device, a data processing system, or a computer program product.

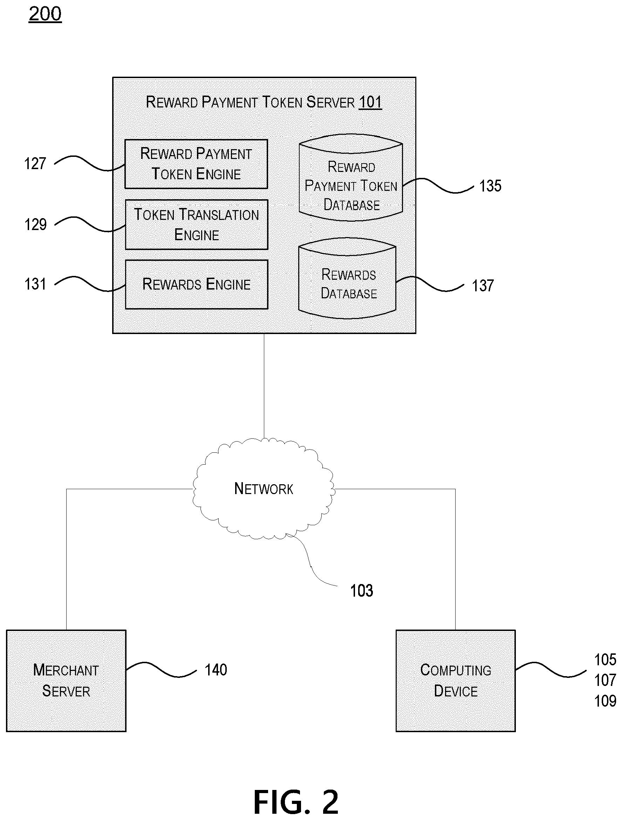

FIG. 2 illustrates an example reward payment token system 200. The reward payment token system 200 may include but not be limited to a reward payment token server 101, a merchant server 140, and one or more devices 105, 107, 109 all connected via the network 103. The various devices 105, 107, 109, reward payment token server 101, and the merchant server 140 may be interconnected via the network 103, such as the Internet. Other networks may also or alternatively be used, including private intranets, corporate networks, LANs, wireless networks, personal networks (PAN), and the like. Network 103 is for illustration purposes and may be replaced with fewer or additional computer networks. A local area network (LAN) may have one or more of any known LAN topology and may use one or more of a variety of different protocols, such as Ethernet.

The reward payment token server 101 as illustrated in FIG. 2 may include one or more of the following components: a reward payment token engine 127, a token translation engine 129, a rewards engine 131, a reward payment token database 135, and a rewards database 137. As will be explained in detail below, the reward payment token server 101, through the reward payment token engine 127, the token translation engine 129, and the rewards engine 131, may connect through the network 103 to the merchant server 140 and the various devices 105, 107, 109.

The reward payment token engine 127 may execute on the reward payment token server 101. The reward payment token database 135 may be connected to the reward payment token engine 127. The reward payment token database 135 may include a plurality of customer accounts and reward payment tokens linked with each of the customer accounts. Generally, the reward payment token engine 127 may request a reward payment token from the token translation engine 129 and receive the reward payment token back from the token translation engine 129. The reward payment token engine 127 may also generate the reward payment token for the customer through the reward payment token server 101 and various devices 105, 107, 109.

The rewards engine 131 may also execute on the reward payment token server 101. The reward database 137 may be connected to the rewards engine 131. The reward database 137 may include a plurality of reward accounts and a reward balance for each of the reward accounts. The reward accounts may be linked with each of the customer accounts. Generally, the rewards engine 131 may receive the reward payment token, check the rewards balance in the customer account, and credit and update the customer's reward account in the reward database 137 with the reward points utilized by the customer for a reward purchase and/or reward transaction. The reward purchase or reward transaction may be any cross-site transaction as known and used in the art.

Additionally, the token translation engine 129 may execute on the reward payment token server 101. Generally, the token translation engine 129 may receive a request for and return the request for the payment token from the reward payment token engine 127. The token translation engine 129 may also receive the reward payment token for approval from the merchant website and merchant server 140. The token translation engine 129 will verify through the rewards engine 131 and the rewards database 137 that the customer has an adequate reward balance for a reward purchase and/or reward transaction. The reward purchase and/or reward transaction may be any cross-site transaction from the customer using reward on a merchant website. Upon approval, the token translation engine 129 will send an approval to the merchant website and merchant server 140 to approve the reward purchase and/or reward transaction.

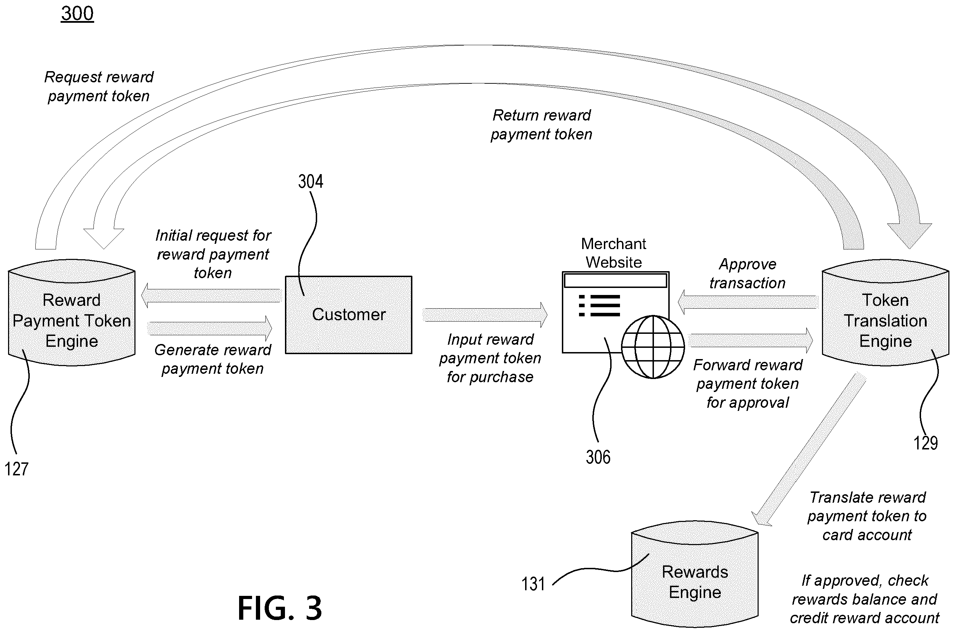

FIG. 3 illustrates an exemplary process flow 300 for spending reward points utilizing payment tokens and verifying reward payment tokens in cross-site transactions for reward purchases. As shown in FIG. 3, a customer 304 may request a reward payment token through a computing device and through the reward payment token system 200 or reward payment token server 101. The customer 304 may request the reward payment token through various different mechanisms, such as via a mobile application operating on the reward payment token server 101 and/or one or more of the devices 105, 107, 109, or via a browser extension or website application on the internet operating on the reward payment token server 101 and/or one or more of the devices 105, 107, 109. The request for the reward payment token may be routed through a reward payment token engine 127. The reward payment token engine 127 may then request a specific reward payment token from a token translation engine 129 and the token translation engine 129 will return the reward payment token to the reward payment token engine 127.

The reward payment token engine 127 or the token translation engine 129 may generate a virtual account number or reward payment token for the customer's reward account or the secondary account. The reward payment tokens may be held in a virtual card number vault. The reward payment token may be mapped or linked back to the customer's primary account. The reward payment token may include a 16-digit virtual card number. The reward payment token may match and be utilized as a standard credit card on a merchant website 306 or the merchant server 140 for a reward purchase or reward transaction. The reward purchase or reward transaction may be any cross-site transaction from the customer using reward points on a merchant website. The virtual account number may be a pseudorandom string of characters generated using a pseudorandom number generator. Alternatively, the virtual account number may be a virtual card number. For example, the virtual card number may be limited to 16 digits. In yet another alternative, the virtual account number may be a token generated by performing a mathematical operation (e.g. a hash function) on the customer's primary account information and/or the customer information, such as the customer's social security number, address, age, credit score, average account balance, etc.

The reward payment token engine 127 will then send the reward payment token to the customer 304 for the reward purchase or reward transaction. Once the customer 304 has the reward payment token, the customer 304 may input the reward payment token for purchase and use in the merchant website 306 or at the merchant location for a reward purchase or reward transaction. The customer 304 may input the reward payment token via any various means known and used in the art, such as manually entering the virtual card number into the merchant website 306 or scanning the virtual card number into the merchant website 306.

The merchant website 306 may then forward the reward payment token for approval back to the reward payment token server 101 and specifically the token translation engine 129. The token translation engine 129 may validate the reward payment token as a reward transaction and not a credit card transaction. The token translation engine 129 may utilize various means for validating the reward payment token as a reward transaction and not a credit card transaction. In one example, the token translation engine 129 may validate the reward payment token as a reward transaction by identifying a specific set of starting digits as part of the 16-digit number, any transaction that starts with the specific set of starting digits that indicates as a rewards transaction. For example, the token translation engine 129 may identify all transactions coming in that start with a specific set of digits as reward payment tokens and those transactions will be treated as a reward transaction. In another example, the token translation engine 129 may validate the reward payment token as a reward transaction by identifying a specific bank identification number of the reward payment token as the reward transaction. In another example, the token translation engine 129 may validate the reward payment token as a reward transaction by identifying a specific card verification value (CW) of the reward payment token as the reward transaction. In yet another example, the token translation engine 129 may validate the reward payment token as a reward transaction by utilizing a real-time time stamp on the reward payment token and the reward purchase as the reward transaction.

The token translation engine 129 may then translate the reward payment token to the card account and send the reward payment token to the rewards engine 131. The rewards engine 131 may verify that a reward balance is greater than the reward purchase. The rewards engine 131 may verify reward balance in one of two ways. First, the rewards engine 131 may automatically check that a reward balance is greater than the rewards purchase. If the reward balance is greater than the rewards purchase, the rewards engine 131 will approve the reward purchase and reward transaction. However, if the reward balance is less than the rewards purchase, the rewards engine 131 will deny or disapprove the reward purchase and reward transaction. In a second method, the reward balance verification may be treated similar to a credit card authorization. The reward balance verification may be treated like a regular credit card authorization and if the customer has enough credit (or rewards), the reward transaction is approved and the reward purchase is offset with the rewards up front. If the customer does not have enough reward balance, then the transaction is treated as a credit card transaction so that the customer is still allowed to make the transaction. This may provide an additional layer on the authorization layer, which is to perform a check to make sure the customer has enough to spend in the credit account and then perform another check with the rewards balance to offset the transaction. The rewards engine 131 may also credit the reward account for the reward purchase or the reward transaction.

Upon validation and verification of the reward payment token, the token translation engine 129 may approve the reward transaction and the reward purchase and send the approval to the merchant website 306. The merchant website 306 may then finalize and complete the reward transaction and reward purchase for the goods or services from the customer.

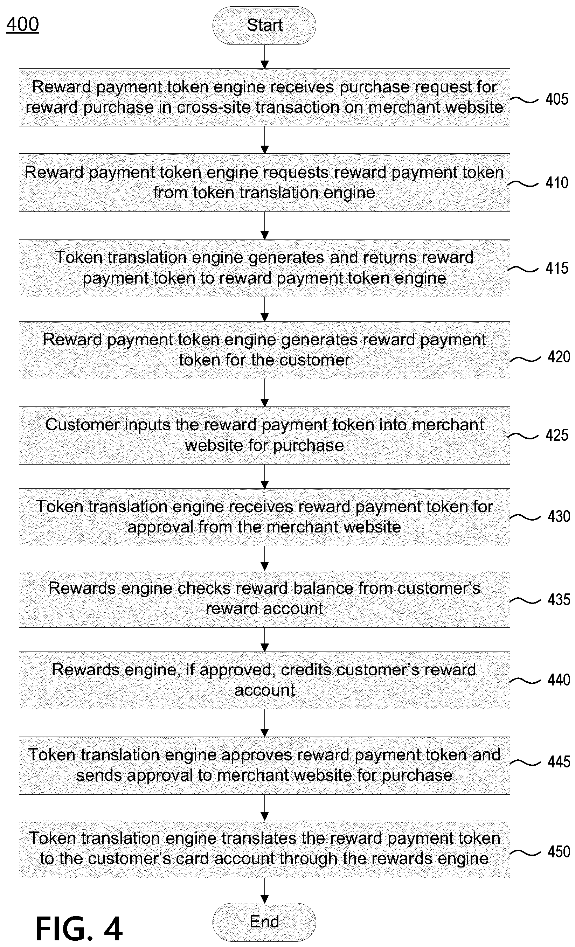

FIG. 4 illustrates an example method 400 for spending reward points utilizing payment tokens and verifying reward payment tokens in cross-site transactions for reward purchases in accordance with one or more aspects described herein. Method 400 may be implemented by a suitable computing system, as described further herein. For example, method 400 may be implemented by any suitable computing environment by a computing device and/or combination of computing devices, such as the reward payment token server 101 and/or devices 105, 107, and 109 of FIG. 1. Method 400 may be implemented in suitable program instructions, such as provided by the reward payment token system 200, reward payment token server 101, and executed on the reward payment token engine 127, the token translation engine 129, and/or the rewards engine 131.

At step 405, the reward payment token system 200 and the reward payment token engine 127 may receive a purchase request from a customer for a reward purchase in a cross-site transaction on a merchant website. The customer 304 may submit the purchase request through various different mechanisms, such as in person at a merchant, via a mobile application operating on the reward payment token server 101 and/or one or more of the devices 105, 107, 109, or via a browser extension or website application on the internet operating on the reward payment token server 101 and/or one or more of the devices 105, 107, 109.

At step 410, the reward payment token engine 127 may request a reward payment token from the token translation engine 129. The reward payment token may include a 16-digit virtual card number. The reward payment token may match and may be utilized a standard credit card on the merchant website for the cross-site transaction. The reward payment token may include an expiration date. The reward payment token may include a card verification value (CW).

At step 415, the token translation engine 129 may generate and return the reward payment token to the reward payment token engine 127. The reward payment token server 101 may include a reward payment token database connected to the reward payment token engine 127. The reward payment token database may include a plurality of customer accounts and reward payment tokens that are linked with each of the plurality of customer accounts.

At step 420, the reward payment token engine 127 may generate the reward payment token for the customer. At step 425, the customer may input the reward payment token into the merchant website for purchase. The customer may input the reward payment token in various methods known and used in the art, such as manually entering the reward payment token into the merchant website or scanning the reward payment token into the merchant website.

At step 430, the token translation engine 129 may receive the reward payment token for approval from the merchant website. At step 435, the rewards engine 131 may check and verify the reward balance from the customer's reward account. The rewards engine 131 may verify that the reward balance is greater than the reward purchase. If the reward balance is not greater than the reward purchase, i.e. the customer is attempting to make a reward purchase with more reward points than they currently have, the reward payment token system 200 may deny the reward transaction. The token translation engine 129 may verify and/or validate the reward payment token for approval. For example, the token translation engine 129 may validate the reward payment token as a reward transaction and not a credit card transaction. The token translation engine 129 may utilize various means for validating the reward payment token as a reward transaction and not a credit card transaction. For example, the token translation engine 129 may validate the reward payment token as a reward transaction by identifying a specific bank identification number of the reward payment token as the reward transaction. In another example, the token translation engine 129 may validate the reward payment token as a reward transaction by identifying a specific card verification value (CW) of the reward payment token as the reward transaction. In yet another example, the token translation engine 129 may validate the reward payment token as a reward transaction by utilizing a real-time time stamp on the reward payment token and the reward purchase as the reward transaction.

At step 440, the rewards engine 131, if the transaction is approved, credits the customer's reward account for the amount of the reward purchase. The reward payment token server 101 may include a rewards database connected to the rewards engine 131. The rewards engine 131 may include a plurality of reward accounts linked with each of the plurality of customer accounts. The rewards database may include the reward balance from the plurality of reward accounts linked with each of the plurality of customer accounts.

At step 445, the token translation engine 129 may approve the reward payment token and may send approval to the merchant website for purchase. At step 450, the token translation engine 129 may translate the reward payment token to the customer's card account through the rewards engine 131. It will be readily appreciated that other steps may be included in this method, and that not all steps are necessary in all situations.

In another embodiment, the reward payment token system 200 and reward payment token server 101 may allow the customer to toggle in the background whether the reward payment token is spending money from the credit line or from the rewards balance. This feature may allow the customer flexibility and security for conducting cross-site reward transactions and reward purchases.

The reward payment token system 200 and reward payment token server 101 allow a customer to spend rewards anywhere. The reward payment token system 200 and reward payment token server 101 provide the unique capability of providing real-time spending of rewards without the customer having a pre-existing relationship and/or integration between the two businesses. For example, some reward systems have built pre-existing reward purchase relationships with other businesses so that the customer can use their rewards at those merchants for purchases. However, this invention, the reward payment token system 200 and reward payment token server 101 removes the requirement for a pre-existing relationship and the integration between the merchant and the customer's reward account. The customer can use the reward points or reward system, through the reward payment token that acts as a credit card, for cross-site transactions at any merchant anywhere.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Embodiments of the present disclosure are set out in the following numbered clauses:
1. A computer-implemented method for verifying reward payment tokens in cross-site transactions for reward purchases, the method comprising:
   receiving, by a reward payment token engine executing on a reward payment token server, a purchase request for a reward purchase in a cross-site transaction on a merchant website;
   requesting, by the reward payment token engine, a reward payment token for the reward purchase from a token translation engine executing on the reward payment token server, wherein the reward payment token includes a 16-digit virtual card number and the reward payment token matches and is utilized as a standard credit card on the merchant website for the cross-site transaction;
   generating, by the token translation engine, the reward payment token for the reward purchase;
   returning, by the token translation engine, the reward payment token for the cross-site transaction on the merchant website;
   receiving, by the token translation engine, the reward payment token from the merchant website;
   verifying, by a rewards engine executing on the reward payment token server, a reward balance is greater than the reward purchase; and
   approving, by the token translation engine, the cross-site transaction and sending the approved cross-site transaction to the merchant website for the reward purchase.
2. The method of clause 1, wherein the reward payment token includes an expiration date.
3. The method of clause 1 or 2, wherein the reward payment token includes a card verification value (CW).
4. The method of any preceding clause, further including:
   validating, by the token translation engine, the reward payment token as a reward transaction and not a credit card transaction.
5. The method of clause 4, wherein validating the reward payment token includes identifying a specific bank identification number of the reward payment token as the reward transaction.
6. The method of clause 4 or 5, wherein validating the reward payment token includes identifying a specific card verification value (CVV) of the reward payment token as the reward transaction.
7. The method of any of clauses 4 to 6, wherein validating the reward payment token includes utilizing a real-time time stamp on the reward payment token and the reward purchase as the reward transaction.
8. The method of any preceding clause, wherein the reward payment token server comprises a reward payment token database connected to the reward payment token engine, the reward payment token database comprising a plurality of customer accounts and reward payment tokens linked with each of the plurality of customer accounts.
9. The method of clause 8, wherein the reward payment token server comprises a rewards database connected to the rewards engine, the rewards database comprising a plurality of reward accounts linked with each of the plurality of customer accounts.
10. The method of clause 9, wherein the rewards database comprises the reward balance from the plurality of reward accounts.
11. The method of clause 10, further including:
   crediting, by the rewards engine, the reward account for the reward purchase.
12. A reward payment token system comprising:
   a reward payment token engine executing on a reward payment token server;
   a reward payment token database connected to the reward payment token engine, the reward payment token database comprising a plurality of customer accounts and reward payment tokens linked with each of the plurality of customer accounts;
   a rewards engine executing on the reward payment token server;
   a rewards database connected to the rewards engine, the rewards database comprising a plurality of reward accounts linked with each of the plurality of customer accounts, and further including a reward balance from the plurality of reward accounts;
   a token translation engine executing on the reward payment token server; and
   memory storing instructions that, when executed by the reward payment token server, cause the reward payment token system to:
      receive, by the reward payment token engine executing on the reward payment token server, a purchase request for a reward purchase in a cross-site transaction to a merchant website;
      request, by the reward payment token engine, a reward payment token for the reward purchase from the token translation engine, wherein the reward payment token includes a 16-digit virtual card number, an expiration date, and a card verification value (CW), and further wherein the reward payment token matches and is utilized as a standard credit card on the merchant website for the cross-site transaction;
      generate, by the token translation engine, the reward payment token for the reward purchase;
      return, by the token translation engine, the reward payment token for the cross-site transaction on the merchant website;
      receive, by the token translation engine, the reward payment token from the merchant website;
      verify, by the rewards engine, the reward balance is greater than the reward purchase; and
      approve, by the token translation engine, the cross-site transaction and sending the approved cross-site transaction to the merchant website for the reward purchase.
13. The reward payment token system of clause 12, wherein the memory storing instructions that, when executed by the reward payment token server, cause the reward payment token system to further:
   validate, by the token translation engine, the reward payment token as a reward transaction and not a credit card transaction.
14. The reward payment token system of clause 13, wherein validating the reward payment token includes identifying a specific bank identification number of the reward payment token as the reward transaction.
15. The reward payment token system of clause 13 or 14, wherein validating the reward payment token includes identifying a specific CW for the CW of the reward payment token as the reward transaction.
16. The reward payment token system of any of clauses 13 to 15, wherein validating the reward payment token includes utilizing a real-time time stamp on the reward payment token and the reward purchase as the reward transaction.
17. The reward payment token system of any of clauses 12 to 16, wherein the memory storing instructions that, when executed by the reward payment token server, cause the reward payment token system to further:
   credit, by the rewards engine, the reward account for the reward purchase.
18. One or more media storing instructions that, when executed by one or more processors, cause a reward payment token server to perform steps comprising:
   receiving, by a reward payment token engine executing on a reward payment token server, a purchase request for a reward purchase from a customer to a merchant website for a cross-site transaction, wherein the reward payment token server includes a reward payment token database that includes a plurality of customer accounts and reward payment tokens linked with each of the plurality of customer accounts, wherein the reward payment token database is connected to the reward payment token engine;
   requesting, by the reward payment token engine, a reward payment token for the reward purchase from a token translation engine executing on the reward payment token server, wherein the reward payment token includes a 16-digit virtual card number, an expiration date, and a card verification value (CW), and further wherein the reward payment token matches and is utilized as a standard credit card on the merchant website for the cross-site transaction;
   generating, by the token translation engine, the reward payment token for the reward purchase;
   returning, by the token translation engine, the reward payment token to the customer;
   receiving, by the token translation engine, the reward payment token from the merchant website;
   validating, by the token translation engine, the reward payment token as a reward transaction and not a credit card transaction;
   verifying, by a rewards engine executing on the reward payment token server, a reward balance is greater than the reward purchase, wherein the reward payment token server includes a rewards database connected to the rewards engine, the rewards database comprising a plurality of reward accounts linked with each of the plurality of customer accounts, and further comprising the reward balance from the plurality of reward accounts;
   approving, by the token translation engine, the cross-site transaction and sending the approved cross-site transaction to the merchant website for the reward purchase; and
   crediting, by the rewards engine, the reward account from the customer for the reward purchase.
19. The one or more media storing instructions of clause 18, wherein validating the reward payment token includes identifying a specific bank identification number of the reward payment token as the reward transaction.
20. The one or more media storing instructions of clause 18 or 19, wherein validating the reward payment token includes utilizing a real-time time stamp on the reward payment token and the reward purchase as the reward transaction.

## Claims

1. A computer-implemented method for verifying reward payment tokens in cross-site transactions for reward purchases, the method comprising:
receiving, by a reward payment token engine executing on a reward payment token server, a purchase request for a reward purchase in a cross-site transaction on a merchant website;
requesting, by the reward payment token engine, a reward payment token for the reward purchase from a token translation engine executing on the reward payment token server, wherein the reward payment token comprises a 16-digit virtual card number and the reward payment token matches and is utilized as a standard credit card on the merchant website for the cross-site transaction;
generating, by the token translation engine, the reward payment token for the reward purchase; returning, by the token translation engine, the reward payment token for the cross-site transaction on the merchant website;
receiving, by the token translation engine, the reward payment token from the merchant website; verifying, by a rewards engine executing on the reward payment token server, a reward balance associated with the reward payment token that is greater than the reward purchase; and approving, by the token translation engine, the cross-site transaction and sending the approved cross-site transaction to the merchant website for the reward purchase.

2. The method of claim 1, wherein the reward payment token comprises an expiration date.

3. The method of any one of claims 1 to 2, wherein the reward payment token comprises a card verification value (CW).

4. The method of any one of claims 1 to 3, further including:
validating, by the token translation engine, the reward payment token as a reward transaction and not as a credit card transaction.

5. The method of claim 4, wherein validating the reward payment token comprises identifying a specific bank identification number of the reward payment token as the reward transaction.

6. The method of claim 4, wherein validating the reward payment token comprises identifying a specific card verification value (CVV) of the reward payment token as the reward transaction.

7. The method of claim 4, wherein validating the reward payment token comprises utilizing a time stamp on the reward payment token and the reward purchase as the reward transaction.

8. The method of any one of claims 1 to 7, wherein the reward payment token server comprises a reward payment token database connected to the reward payment token engine.

9. The method of claim 8, wherein the reward payment token database comprises a plurality of customer accounts and reward payment tokens linked with each of the plurality of customer accounts.

10. The method of any one of claims 8 to 9, wherein the reward payment token server comprises a rewards database connected to the rewards engine, the rewards database comprising a plurality of reward accounts linked with each of the plurality of customer accounts.

11. The method of claim 10, wherein the rewards database comprises the reward balance from the plurality of reward accounts.

12. The method of any one of claims 8 to 9, further comprising crediting, by the rewards engine, a reward account of the plurality of reward accounts for the reward purchase.

13. An apparatus comprising:
one or more processors; and
memory storing instructions that, when executed by the one or more processors, causes the apparatus to perform the method of any one of claims 1-12.

14. A system comprising:
the apparatus of claim 13; and
the merchant website configured to send the reward payment token.

15. A computer-readable storage medium storing computer-executable instructions that, when executed, cause performance of the method of any one of claims 1-12.
